# EUROPÄISCHE PATENTANMELDUNG

(11) **EP 4 397 825 A1**
(43) Veröffentlichungstag der Anmeldung: **10.07.2024**
(21) Anmeldenummer: 23216615.7
(22) Anmeldetag: 14.12.2023
(51) Int. Cl.: E04H 12/10, F03D 13/20, H02S 10/00, H02S 20/00, F03D 3/00

(54) **LEITUNGSMAST ZUM ÜBERIRDISCHEN HALTEN VON LEITUNGEN SOWIE VERFAHREN ZUR VERWENDUNG VON LEITUNGSMASTEN**

(30) Priorität: 21.12.2022 DE 102022004909; 21.04.2023 DE 102023001581
(71) Anmelder: Geuenich, René, 50259 Pulheim (DE)
(72) Erfinder: Geuenich, René, 50259 Pulheim (DE)
(74) Vertreter: Castell, Klaus

(57) **Zusammenfassung**

Die Erfindung betrifft einen Leitungsmast zum überirdischen Halten von Leitungen, der eine Stromerzeugungseinrichtung aufweist sowie ein Verfahren zur Verwendung von Leitungsmasten.

## Beschreibung

Die Erfindung betrifft einen Leitungsmast zum überirdischen Halten von Leitungen sowie ein Verfahren zur Verwendung von Leitungsmasten. Derartige Masten sind in der Regel als Hochspannungsmasten bekannt und aufwändig in der Herstellung und im Prozess der Aufstellung.

Der Erfindung liegt die Aufgabe zu Grunde, derartige Leitungsmasten weiterzuentwickeln.

Diese Aufgabe wird mit einem Leitungsmast mit den Merkmalen des Patentanspruchs 1 gelöst.

Vorteilhafte Weiterbildungen sind Gegenstand der Unteransprüche.

Der Erfindung liegt die Erkenntnis zu Grunde, dass die für das Leiten von Strom bekannten Masten zusätzlich auch für die Stromerzeugung verwendet werden können. Dies gilt einerseits für am Mast angeordnete Aggregate, wie beispielsweise Sendeanlagen. Dies gilt aber insbesondere für die Erzeugung von Strom, der am Mast erzeugt wird und zum Boden abgeleitet wird, um ihn für benachbarte Stromverbraucher zu verwenden. Ein bevorzugtes Einsatzgebiet liegt darin, den erzeugten Strom über die Masten zu einer Batterie oder einem Verbraucher weiterzuleiten. Somit können mehrere Stromerzeuger auch an unterschiedlichen Masten gemeinsam Strom erzeugen, der über eine Leitung zu einer Batterie oder einem Verbraucher weitergeleitet wird. Besonders bevorzugt ist die Stromerzeugung an mehreren hierzu geeigneten Masten, das Sammeln des Stromes von diesen Masten über die Masten verbindende Leitungen und das Speichern oder Verbrauchen des Stroms. Dafür können die Hochspannungsleitungen eines Hochspannungsmastes verwendet werden oder es werden zusätzliche Leitungen vorgesehen, die den Strom der an den Leitungsmasten angebrachten Stromerzeugungseinrichtungen weiterleiten.

Der Strom kann an den Masten über Solaranlagen erzeugt werden. Besonders vorteilhaft ist es, wenn der Leitungsmast eine Windkraftanlage aufweist. Es können aber auch Windkraftanlagen und Solaranlagen an den Masten miteinander verbunden werden, um je nach Standort des Mastes die optimale Energieerzeugungseinrichtung zu verwenden.

Zwei Ausführungsbeispiele sind in den Figuren dargestellt.

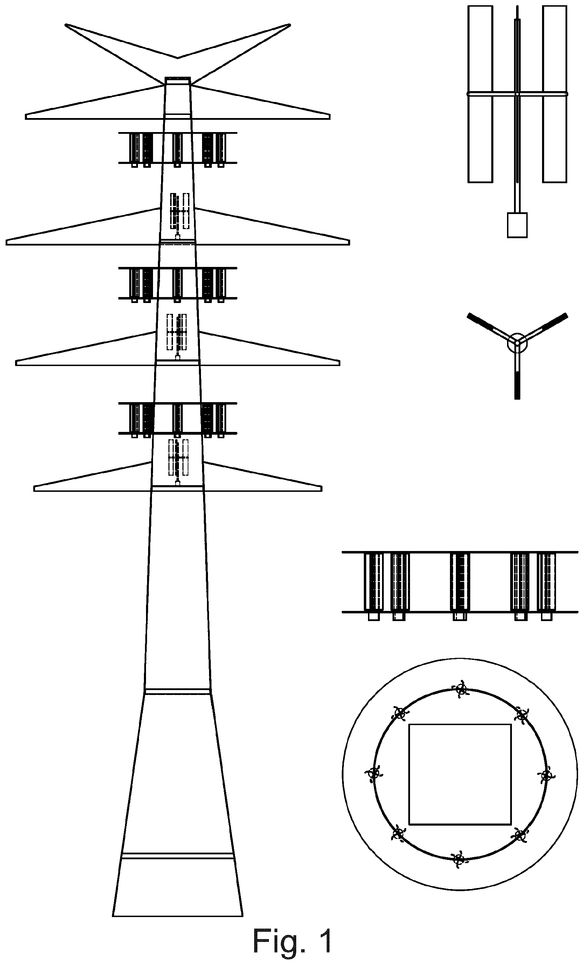

Die Figur 1 zeigt einen Hochspannungsmast mit mindestens einem Ring, der konzentrisch zu einer zentralen senkrechten Achse des Hochspannungsmastes angeordnet ist und mindestens einen Rotor aufweist. Es können mehrere derartige Ringe übereinander angeordnet werden und die Ringe können mehrere Rotoren aufweisen.

Die Figur 2 zeigt eine Draufsicht auf den in Figur 1 gezeigten Hochspannungsmast.

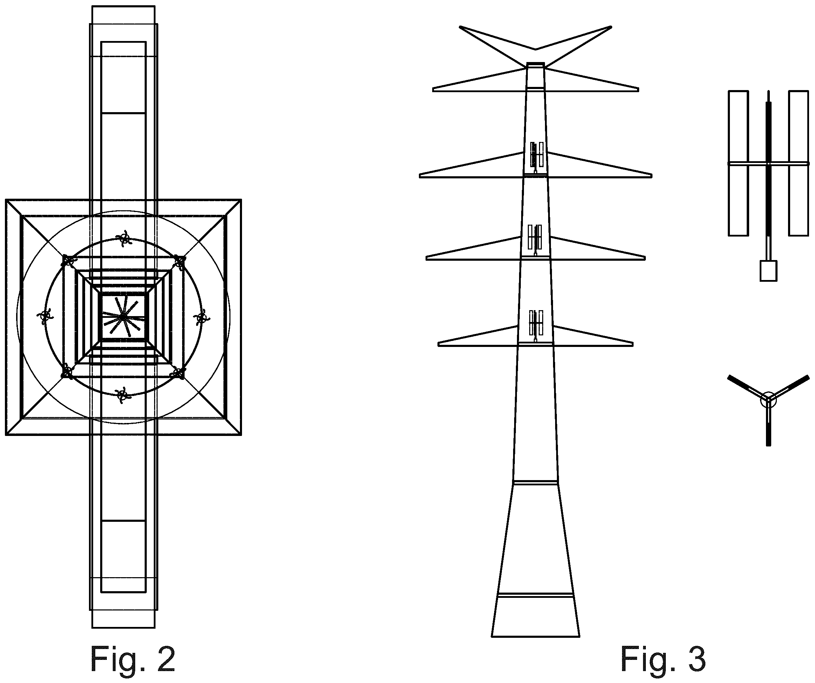

Ein alternatives Ausführungsbeispiel zeigt die Figur 3. Hier sind nur innerhalb des Gerüstes des Hochspannungsmastes Rotoren angeordnet.

Die Figuren zeigen, dass die Stromerzeugungseinrichtungen zwischen waagerechten Armen des Leitungsmastes innerhalb der Fachwerkkonstruktion des Leitungsmastes oder auch außerhalb dessen Fachwerkkonstruktion angeordnet sein können. Sie können in der Ebene der waagerechten Arme und auch zwischen den Ebenen der waagrechten Arme angeordnet sein.

Ferner können die Stromerzeugungseinrichtungen innerhalb des Fachwerks angeordnet sein oder auch beispielsweise ringförmig um einen Leitungsmastbereich herum angeordnet sein.

Dies ermöglicht es, die Stromerzeugungseinrichtungen relativ hoch anzuordnen und deren Energie vorzugsweise auch längs mehreren hintereinander angeordneter Masten weiterzuleiten, um ihn an einer von der Stromerzeugungsstelle beabstandeten Stelle einem Verbraucher oder Verteiler zuzuordnen.

Die Leitungsmasten sind in der Regel Hochspannungsmasten und die zwischen diesen Masten geführten Leitungen zur Weiterleitung des Stroms der Stromerzeugungseinrichtungen sind eher Niederspannungsleitungen, da der benötigte Leitungsweg viel geringer ist und da die Leitungen auch dicker ausgeführt werden können.

## Patentansprüche

1. Leitungsmast zum überirdischen Halten von Leitungen, ***dadurch gekennzeichnet, dass*** er eine Stromerzeugungseinrichtung aufweist.

2. Leitungsmast nach Anspruch 1, ***dadurch gekennzeichnet, dass*** er ein Hochspannungsmast ist.

3. Leitungsmast nach einem der vorhergehenden Ansprüche, ***dadurch gekennzeichnet, dass*** er eine Solaranlage aufweist.

4. Leitungsmast nach einem der vorhergehenden Ansprüche, ***dadurch gekennzeichnet, dass*** er eine Windkraftanlage aufweist.

5. Leitungsmast nach einem der vorhergehenden Ansprüche, ***dadurch gekennzeichnet, dass*** er eine Solaranlage und eine Windkraftanlage aufweist.

6. Leitungsmast nach Anspruch 5, ***dadurch gekennzeichnet, dass*** die Solaranlage und die Windkraftanlage übereinander angeordnet sind.

7. Leitungsmast nach Anspruch 4, ***dadurch gekennzeichnet, dass*** er einen Widerstandsläufer aufweist.

8. Leitungsmast nach Anspruch 5 oder 7, ***dadurch gekennzeichnet, dass*** er einen Auftriebsläufer aufweist.

9. Leitungsmast nach Anspruch 8, ***dadurch gekennzeichnet, dass*** er der Auftriebsläufer eine vertikale Rotorachse aufweist.

10. Leitungsmast nach einem der vorhergehenden Ansprüche, ***dadurch gekennzeichnet, dass*** er eine Fachwerkkonstruktion aufweist.

11. Leitungsmast nach Anspruch 10, ***dadurch gekennzeichnet, dass*** die Stromerzeugungseinrichtung innerhalb der Fachwerkkonstruktion angeordnet ist.

12. Leitungsmast nach Anspruch 10 oder 11, ***dadurch gekennzeichnet, dass*** die Stromerzeugungseinrichtung außerhalb der Fachwerkkonstruktion angeordnet ist.

13. Verfahren zur Verwendung von Leitungsmasten nach einem der vorhergehenden Ansprüche, ***dadurch gekennzeichnet, dass*** die Leitungsmasten erste Stromleitungen halten und davon unabhängige zweite Stromleitungen halten, die den Strom von mindestens einer Stromerzeugungseinrichtung weiterleiten.
